(19) **Europäisches Patentamt European Patent Office Office européen des brevets**

(11) **EP 4 138 566 B1**

(12) **EUROPEAN PATENT SPECIFICATION**

(45) Date of publication and mention of the grant of the patent:
**20.05.2026 Bulletin 2026/21**

(21) Application number: **21718621.2**

(22) Date of filing: **20.04.2021**

(51) International Patent Classification (IPC):
*A23G 9/48* (2006.01)    *A23C 9/12* (2006.01)
*A23C 9/123* (2006.01)    *A23C 11/10* (2025.01)
*A23C 20/02* (2025.01)    *A23L 9/20* (2016.01)
*A23P 30/25* (2016.01)    *A23C 9/13* (2006.01)
*A23C 9/133* (2006.01)    *A23C 19/076* (2006.01)
*A23C 19/09* (2006.01)

(52) Cooperative Patent Classification (CPC):
**A23G 9/48; A23C 9/1307; A23C 9/133; A23C 19/0765; A23C 19/09; A23L 9/24; A23P 30/25;** A23C 2270/05

(86) International application number:
**PCT/EP2021/060267**

(87) International publication number:
**WO 2021/214076 (28.10.2021 Gazette 2021/43)**

(54) **FOOD PRODUCT WITH A HETEROGENEOUS SUGAR DISTRIBUTION**

LEBENSMITTELPRODUKT MIT HETEROGENER ZUCKERVERTEILUNG

PRODUIT ALIMENTAIRE AYANT UNE DISTRIBUTION DE SUCRE HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2020 EP 20170483**

(43) Date of publication of application:
**01.03.2023 Bulletin 2023/09**

(73) Proprietor: **Société des Produits Nestlé S.A. 1800 Vevey (CH)**

(72) Inventors:
• **MOREAU, Jean
  14340 Manerbe (FR)**

• **MARCHAL, Jerôme
  89100 Saint-Martin-Du-Tertre (FR)**
• **DENIS, Claire
  37550 Saint Avertin (FR)**
• **LE REVEREND, Benjamin Jean, Didier
  Kirkwood, Missouri 63122 (US)**
• **LUX, Nicolas
  80600 Doullens (FR)**

(74) Representative: **Seisson, Morgan Franck
  Société des Produits Nestlé S.A.
  Avenue Nestlé 55
  1800 Vevey (CH)**

(56) References cited:
**EP-A1- 0 615 692      EP-A2- 2 668 848
WO-A1-2017/216196      US-A1- 2003 039 728**

## Description

### TECHNICAL FIELD

The present invention relates to a packaged food products. The invention is set out in the appended set of claims.

### BACKGROUND OF THE INVENTION

With the growing burden of metabolic diseases (e.g. obesity, diabetes, hypertension), more and more consumers are concerned about how their health may be impacted by their food intake. Especially, consumers adapt their diets to limit their daily intake of sugar or fat. Indeed, a link between an excess calorie consumption, including excess consumption of sugar, and the incidence of certain metabolic diseases, such as obesity, has been observed. Hence, reducing the sugar intake by consumers, especially children's, is paramount.

In this context, many governments have taken measures to limit sugar intake by reducing the sugar content of food products. For example, the executive agency Public Health England (PHE) has implemented a sugar reduction programme. This programme challenges food industries to reduce by 20% and by 2020 the overall sugar content of the food products which contribute the most to children's sugar intakes. Several categories of products are covered by the program, such as yoghurts, puddings, or sweet spreads and sauces.

Hence, there is a need to provide food products, in particular chilled desserts, with a reduced sugar content.

A solution consists in the total or partial substitution of sugar with low or non-caloric sweeteners in food products. Examples of sweeteners include sucralose, acesulfame K, or stevia. However, such ingredients may be rejected by some consumers due to controversies about their potential negative effects on health. Moreover, they are not always satisfactory in terms of organoleptic properties. Indeed, they do not totally mimic the sensory character of sugar. Moreover, they can provide undesirable aftertaste such as liquorice and metallic aftertastes.

Another solution consists in a simple decrease in the amount of sugar in a chilled dessert, without replacing it with a sweetener. However, this decrease in sugar content results inexorably in a decrease in sweet taste perception. Hence, the resulting product may be unsatisfactory from an organoleptic perspective. Especially, chilled desserts with a low sweet taste perception, are not appreciated by some consumers.

Moreover, the decrease in sugar content may impact the texture of the chilled desserts as sugar also has bulking agent properties. Hence, reducing sugar content may require the addition of alternative bulking ingredients in the chilled desserts to compensate for the loss of texture. From an economical and clean label standpoint, the addition of ingredients is not desirable.

WO2017/216196 A1 relates to a chilled dairy dessert which comprises a mousse with large solid pieces and threads of sauce embedded in the mousse. The mousse may comprise added sugar. The chilled dairy dessert exhibits three different textures, different flavours and has a long shelf-life.

US2003/0039728 A1 relates to dispensing system and method for on-demand dispensing of spoonable or drinkable food products in a container. The food products comprise different food components such as one or several acidified dairy products and/or one or several fruit-based or flavoured components (e.g. jams etc.). The dispensing system and method allows the on-demand provision of combinations of food components having a pleasing distinctive appearance in a cup.

These prior arts relate to technologies for achieving multi-component food products, including desserts, providing appealing multi-sensory experience: pleasant multiple textures, different flavours and attractive contrasted appearance. None of these prior arts directs the improvement of the sweetness perception of desserts while limiting their sugar content.

Hence, there still remains a need to provide new solutions to limit the sugar content in a food product, such as a chilled dessert, without compromising the organoleptic properties of such a food product, especially the sweet taste perception.

Any reference to prior art documents in this specification is not to be considered an admission that such prior art is widely known or forms part of the common general knowledge in the field.

### SUMMARY OF THE INVENTION

The object of the present invention is to improve the state of the art, and in particular to provide a product that overcomes the problems of the prior art and addresses the needs described above, or at least to provide a useful alternative.

Accordingly, the invention proposes a packaged food product comprising:

- a container which comprises a bottom wall and a side wall extending along a longitudinal axis from said bottom wall to a top, the bottom wall and the side wall define a hollow body, the top having an opening opposite the bottom wall, optionally comprising a seal over the top of the container,

- in the hollow body of the container, a chilled dessert which comprises a flavouring sauce embedded in a matrix consisting of a dessert composition,

wherein the dessert composition is entirely free of added sugar, wherein the flavouring sauce comprises at least 25wt% of added sugar, and wherein the amount of flavouring sauce decreases from the top to the bottom of the chilled dessert, and wherein the amount of flavouring sauce (224', 521, 721) is at least 25% higher in the top half of the chilled dessert than in the bottom half of the chilled dessert,

wherein the chilled dessert (2) comprises from 60wt% to 90wt% of dessert composition (21) and wherein the chilled dessert comprises from 10wt% to 40wt% of flavouring sauce.

The top half of the chilled dessert comprises more flavouring sauce than the bottom half of the chilled dessert. Specifically, according to the invention, the amount of flavouring sauce is at least 25% higher in the top half of the chilled dessert than in the bottom half of the chilled dessert.

Preferably, the flavouring sauce is arranged as three-dimensional patterns within the matrix, over the height of said matrix, for instance as dots, spirals, or layers. For instance, the flavouring sauce is distributed as at least two spirals, preferably three spirals, extending over the height of the chilled dessert. In an embodiment, the spirals meet at the surface of the chilled dessert.

In an embodiment, the chilled dessert comprises from 75wt% to 90wt% of dessert composition. The dessert composition may be selected from fermented dairy compositions, dairy dessert cream compositions, dairy pudding compositions, dairy mousse compositions and plant-based analogues thereof.

In an embodiment, the chilled dessert comprises from 10wt% to 25wt% of flavouring sauce. The flavouring sauce may be selected from fruit preparations, chocolate sauces, coffee sauces, nut sauces and mixtures thereof.

These and other aspects, features and advantages of the invention will become more apparent to those skilled in the art from the detailed description of embodiments of the invention, in connection with the attached drawings.

## BRIEF DESCRIPTION OF THE DRAWINGS

Figure 1 shows an example of a packaged food product not according to the invention.
Figure 2 is a side view of a packaged food product according to the invention with a sauce distributed as spirals.
Figure 3 is a cross-section (3B) of the packaged food product shown on figure 1, along the plane $P_C$ (figure 3A).
Figure 4 shows a schematic representation of another example of a packaged food product according to the invention with horizontal layers.
Figure 5 shows a schematic representation of another example of a packaged food product according to the invention with spots.
Figure 6 shows a schematic representation of the dosing pattern of the kitchen-scale chilled desserts of Example 1, seen from the side (A) and seen from above (B).

## DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

"Entirely free" means that no detectable amount is present.

The term "chilled dessert" refers to a dessert, which must be stored at a refrigerated temperature over its shelf life. Refrigerated temperatures range from above 0°C to 10°C.

The term "shelf life" refers to the period of time after production of the chilled dessert, during which the dessert is transported, and stored in retailers' or consumers' shelves, before consumption. Preferably, the shelf life refers to a period of at least 7 days, at least 14 days or at least 30 days. More preferably, the shelf life refers to a period of 7 days, 14 days or 30 days.

The term "added sugar" refers to caloric mono- and di-saccharides added during the manufacture of the chilled dessert, such as glucose, sucrose, maltose, fructose, which are not naturally found respectively in the dessert composition nor in the flavouring sauce. For instance, the dessert composition may comprise dairy ingredients such as milk. Lactose is naturally found in milk, therefore, lactose is not taken into account in "added sugar".

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

The inventors have discovered that the heterogeneous distribution of an amount of added sugar within a chilled dessert increases the sweet taste perception compared to a chilled dessert having a homogenous distribution of the same overall amount of added sugar. Especially, a chilled dessert comprising a dessert composition entirely free of added sugar and a flavouring sauce which contains added sugar, is perceived sweeter than a chilled dessert comprising a homogeneous distribution of the same amount of added sugar between the flavouring sauce and the dessert composition. Hence, it appears that the amount of added sugar may be decreased in a product having a heterogeneous distribution of added sugar while still reaching the same sweet taste perception as that of a product with a homogeneous distribution of added sugar.

This increase in sweetness perception seems to be possible when the two components, i.e. the dessert composition and the flavouring sauce, of a chilled dessert are substantially different in terms of composition and viscosity. This is the case for a chilled dessert comprising a dessert composition and a flavouring sauce. Especially, the inventors have noticed that an increase in sweetness perception is not observed in a chilled dessert comprising a dessert composition entirely free of added sugar and the same dessert composition comprising at least 25wt% of added sugar. Further details are given below.

**Chilled dessert**

The chilled dessert comprises a flavouring sauce embedded in a matrix consisting of a dessert composition.

The flavouring sauce provides indulgence to the chilled dessert by bringing contrasting colours, contrasting textures and contrasting flavours compared to the dessert composition. Moreover, the flavouring sauce comprises added sugar and participates in providing a targeted sweet taste to the whole dessert. To limit the amount of added sugar in the chilled dessert and to achieve an acceptable flavour intensity, the flavouring sauce has to be a minority compound compared to the dessert composition. According to the invention, the chilled dessert comprises from 10wt% to 40wt% of flavouring sauce, preferably from 15wt% to 40wt% of flavouring sauce.

Overall, the chilled dessert comprises at least 3.0wt% added sugar, at least 5.0wt% added sugar, or at least 7.0wt% added sugar. Preferably, the chilled dessert comprises from 3.0wt% to 15wt% of added sugar, from 3.0wt% to 12wt% of added sugar or from 5.0wt% to 12wt% of added sugar. More preferably, the chilled dessert comprises from 7.0wt% to 12wt% of added sugar.

Moreover, the chilled dessert comprises at least 2.0wt% of fat and at least 4.5wt% of proteins.

**Dessert composition**

The chilled dessert comprises a dessert composition as a matrix, which is entirely free of added sugar, and a flavouring sauce. In a preferred embodiment, the dessert composition is entirely free of added sugar. Preferably, the added sugar is sucrose. Therefore, in a preferred embodiment, the dessert composition is free of added sucrose.

The chilled dessert is a spoonable chilled dessert. By "spoonable chilled dessert", it is understood a chilled dessert having a consistency allowing its consumption with a spoon but hardly allowing its consumption by drinking.

The dessert composition is a dairy dessert composition or a plant-based analogue of a dairy dessert composition. By "dairy dessert composition", it is understood a dessert composition which comprises at least 50wt% of one or more dairy ingredients. The term "dairy composition" also refers to compositions consisting of water and less than 50wt% of one or more dairy ingredients. For example, the dairy ingredients can be milk, milk fat, milk powder, skim milk, milk proteins, dairy curd, cream, buttermilk and combinations thereof. Examples of suitable milk proteins are casein, caseinate, casein hydrolysate, whey, whey hydrolysate, whey concentrate, whey isolate, milk protein concentrate, milk protein isolate, and combinations thereof. Furthermore, the milk protein may be, for example, sweet whey, acid whey, $\alpha$-lactalbumin, $\beta$-lactoglobulin, bovine serum albumin, acid casein, caseinates, $\alpha$-casein, $\beta$-casein, and/or $\gamma$-casein. In an embodiment, the dairy dessert composition comprises at least one of dairy curd, skim milk, whole pasteurized milk, skim milk powder, and cream. Dairy curd corresponds to the dairy coagulum, optionally strained, which is obtained by treating dairy ingredients such as milk with rennet and/or lactic acid strains. Preferably, the dairy dessert composition comprises skim milk, cream and skim milk powder.

By "plant-based analogue of a dairy dessert composition" or "plant-based analogue", it is understood a plant-based dessert composition which is free of any dairy ingredients and which mimics the texture and visual properties of a dairy dessert composition. A plant-based analogue of a dairy dessert composition may comprise water, plant-based milks, plant-based creams, plant-based pastes and non-dairy proteins. Examples of plant-based milks include almond milk, banana milk, cashew milk, chestnut milk, coconut milk, hazelnut milk, flaxseed milk, hemp seed milk, lupin milk, oat milk, pea milk, peanut milk, pine nut milk, pistachio milk, rice milk, sesame seed milk, sunflower seed milk, walnut milk and mixtures thereof. Examples of plant-based pastes include almond paste, cashew paste, peanut paste, walnut paste and mixtures thereof. Examples of plant-based creams include almond cream, coconut cream, soy cream and mixtures thereof. Examples of non-dairy proteins include fungal proteins, plant proteins and seaweed proteins. Examples of plant proteins include adzuki bean proteins, brewer's spent grain proteins, canola proteins, chickpea proteins, fava bean proteins, hemp proteins, mung bean proteins, oat proteins, pea proteins, potato proteins, pumpkin seed proteins, rapeseed proteins, rice proteins, soy proteins, sunflower seed proteins, wheat proteins and mixtures thereof.

In a preferred embodiment, the dessert composition is selected from the list consisting of fermented dairy compositions, dairy dessert cream compositions, dairy pudding compositions, dairy mousse compositions and plant-based analogues thereof. In a more preferred embodiment, the dessert composition is a fermented dairy composition. The term "fermented dairy composition" relates to a coagulated dairy composition suitable for human consumption obtained by fermentation of a dairy base with at least one lactic acid strain. Examples of fermented dairy composition include yogurt, spoonable kefir, cottage cheese, fresh cheese, white cheese, petit-suisse, skyr and combinations thereof, as well as plant-based analogues thereof.

The fermented dairy composition may comprise at least one lactic acid bacteria as a starter culture. Appropriate lactic acid bacteria are known by persons having ordinary skill in the art. Examples of lactic acid bacteria that can be used as starter cultures include:

- *Lactobacilli,* for example *Lactobacillus acidophilus, Lactobacillus casei, Lactobacillus plantarum, Lactobacillus reuteri, Lactobacillus johnsonii, Lactobacillus helveticus, Lactobacillus brevis, Lactobacillus rhamnosus,*
- *Streptococci,* for example *Streptococcus thermophilus,*
- Bifidobacteria, for example *Bifidobacterium bifidum, Bifidobacterium longum, Bifidobacterium breve, Bifidobacterium animalis,*
- *Lactococci,* for example *Lactococcus lactis,*
- *Propionibacterium,* for example, *Propionibacterium freudenreichii, Propionibacterium freudenreichii ssp shermanii, Propionibacterium acidipropionici, Propionibacterium thoenii,*
- *Bacilli,* for example, *Bacillus coagulans,*
- mixtures or associations thereof.

The fermented dairy composition may further comprise at least one of the preceding lactic acid bacteria or one or more other food-grade microorganisms, for instance probiotics, such as non-lactic acid bacteria or yeasts. Probiotics are live food-grade microorganisms, such as bacteria or yeasts, that provide health benefits when they are consumed. For example, *Lactobacillus johnsonii* and *Bifidobacterium animalis* strains are probiotic strains known for promoting digestive health.

The fermented dairy composition has an acidic pH ranging from 4.5 and 5.5.

Fermented dairy compositions such as fresh cheese, white cheese, cottage cheese, petit-suisse, may comprise leaven and/or rennet to promote the coagulation of the dairy base.

In a preferred embodiment, the dessert composition is a fresh cheese. Especially, the dessert composition comprises at least one dairy ingredient, leaven and optionally rennet. More especially, the dairy ingredients are selected from the list consisting of dairy curd, skim milk, whole pasteurized milk, skim milk powder, and cream. Preferably, cream is a homogenized cream. It has been discovered that the present invention enables to prepare a chilled dessert having an enhanced sweet taste perception upon consumption, even if said chilled dessert is based on a fresh cheese which is free from added sugar.

In another embodiment, the dessert composition may comprise one or more additional food-grade ingredients to improve its visual, organoleptic and nutritional properties. Examples of such additional ingredients include antioxidants, colorants, edible oils, fibres, flavours, solid or soft inclusions, minerals, prebiotics, texturizing agents, vitamins and mixtures thereof. The term "texturizing agents" refers to ingredients, which are added to a food product to increase its viscosity such as acacia gum, agar, alginate, carrageenan, gelatine, guar gum, locust bean gum, pectin, starch and/or xanthan gum. Preferably, the chilled dessert is free of any texturizing agents. Indeed, there is a growing trend within consumers to avoid ingredients which are perceived as non-natural.

According the invention, the dessert composition is the major component of the chilled dessert, which comprises from 60wt% to 90wt% of dessert composition, preferably from 75wt% to 90wt% of dessert composition, more preferably from 80wt% to 90wt% of dessert composition.

In another embodiment, the dessert composition has a Bostwick consistency of at most 4.0 cm, preferably of at most 3.5cm at 1 minute and at 14.5°C. Preferably, the dessert composition is more viscous than the flavouring sauce.

**Flavouring sauce**

In addition to the dessert composition, the chilled dessert comprises a flavouring sauce, which comprises at least 25wt% of added sugar. The term "flavouring sauce" refers to a liquid or semi-liquid composition which provides an organoleptic contrast to the dessert composition, through colour, flavour or aroma. For instance, the contrasting flavour may be fruit flavours, chocolate/coffee flavours, nut flavours or the like. Preferably, the flavouring sauce is selected from the list consisting of fruit preparations, chocolate sauces, coffee sauces, nut sauces and mixtures thereof. Examples of nut sauces include chestnut sauces, peanut sauces, pistachio sauces, hazelnut sauces and mixtures thereof. More preferably, the flavouring sauce is a fruit preparation. The fruit preparation is selected from the list consisting of fruit coulis, fruit purees, fruit compotes, fruit chutney and mixtures thereof. Examples of fruit preparations include apricot preparation, apple preparation, cherry preparation, banana preparation, blackberry preparation, blackcurrant preparation, blueberry preparation, cherry preparation, grapefruit preparation, kiwi preparation, lemon preparation, mango preparation, orange preparation, passionfruit preparation, peach preparation, pineapple preparation, pomegranate preparation, raspberry preparation, strawberry preparation and mixtures thereof.

In another embodiment, the flavouring sauce may comprise one or more additional food-grade ingredients to improve its visual, organoleptic and nutritional properties. Examples of such additional ingredients include acidifying ingredient, antioxidants, colours, edible oil, fibres, flavours, floral essences, herbs, minerals, preservatives, prebiotics, probiotics, spices, texturizing agents, vitamins and mixtures thereof.

In a preferred embodiment, the flavouring sauce comprises water, at least one fruit puree and at least one colour. The flavouring sauce may also comprise fibres, at least one preservative and at least one acidifying ingredient. For example, the preservative is a sorbate such as potassium sorbate. For example, the acidifying ingredient is lemon juice.

In a further embodiment, the flavouring sauce has a Bostwick consistency of at least 4.5 cm, preferably 5.0 cm at 1 minute and at 20°C. Therefore, it is much less consistent than the dessert composition.

As previously mentioned, the flavouring sauce comprises added sugar. According to the invention, the flavouring sauce comprises at least 25wt% of added sugar. Preferably, the flavouring sauce comprises least 30wt%, at least 35wt% of added sugar, at least 40wt% of added sugar, at least 45wt% of added sugar, at least 50wt% of added sugar. More preferably, the flavouring sauce comprises from 25wt% to 70wt%, from 25wt% to 50wt% or from 30wt% to 50wt% of added sugar. The amount of added sugar in the flavouring sauce is such that the amount of added sugar in the chilled dessert is limited while allowing enhanced sweet taste perception upon consumption. Especially, more preferably, the flavouring sauce comprises 25wt% to 45wt%, preferably 30wt% to 45wt%. Even more preferably, the flavouring sauce comprises 25wt.% to 40wt.%, preferably 30wt% to 40wt% of added sugar. Most preferably, the flavouring sauce comprises 32wt.% to 38wt.% of added sugar.

In another most preferred embodiment, the flavouring sauce comprises 36wt.% added sugar.

## Distribution of the flavouring sauce

The amount of flavouring sauce decreases from the top to the bottom of the chilled dessert. In other words, there is comparatively more flavouring sauce at the top of the chilled dessert than at the bottom.

Without wishing to be bound by theory, the inventors believe that such a structure enables to amplify the sweet taste perception. Especially, as there is more flavouring sauce in the top of the chilled dessert, it would enable to saturate the sweetness receptors in the consumer's mouth quickly, with the first few spoons of chilled dessert, with the added sugar present in the flavouring sauce. The amount of added sugar in the bottom of the chilled dessert, i.e. the amount of flavouring sauce, may thus be lower than in the top because the sweetness receptor would already be saturated. Therefore, the overall sweetness perception does not reduce over the time of consumption of the chilled dessert. During the consumption of the bottom of the chilled dessert, the sweetness perception would remain in mouth despite a lower amount of flavouring sauce, and therefore of added sugar, in the bottom half of the chilled dessert. Moreover, by plunging the spoon in the chilled dessert, the flavouring sauce present in the top half will penetrate the bottom half of the chilled dessert. This will enable to have, at each spoonful of chilled dessert, a part of dessert composition and a part of flavouring sauce, even in the bottom half of the chilled dessert.

According to the invention, the flavouring sauce is distributed over the height of the chilled dessert such that the amount of flavouring sauce is higher in the top half of the chilled dessert than in the bottom half of the chilled dessert, wherein the amount of flavouring sauce is at least 25% higher in the top half of the chilled dessert than in the bottom half of the chilled dessert, the top half and the bottom half of the chilled dessert being defined relative to the plane passing at mid-height of the chilled dessert and perpendicular to the height of the chilled dessert.

The dessert composition and the flavouring sauce are arranged as discrete components. By "discrete", it is understood that the dessert composition and the flavouring sauce are distinct within the chilled dessert. The dessert composition and the flavouring sauce are not mixed together, or substantially not mixed together. Indeed, at their interface, an amount of interpenetration may occur during dosing, transport or storing. This may give the impression that some mixing occurs at the interface between said two components. This is due to transfer of certain ingredients, such as colours, from the flavouring sauce to the dessert composition over the shelf life. Providing discrete components is an important feature. Indeed, when the two components are mixed, the inventors have noticed that the improvement of the sweet taste perception is lost (see example 1 below).

**Patterns**

The flavouring sauce is distributed, within the dessert composition, over the height of the chilled dessert in the form of three-dimensional patterns. Without wishing to be bound by theory, the inventors believe that the improvement of the sweetness perception is possible only when during consumption, with each spoonful of the chilled dessert, part of the dessert composition and a part of the flavouring sauce are taken together. The latter is ensured by distributing within the dessert composition the flavouring sauce over the height of the chilled dessert. The term "the height of the chilled dessert" means from the bottom wall of the container to the surface of the chilled dessert.

The term "patterns" refers to a repetitive, continuous or discontinuous, three-dimensional shape such as horizontal layers, strands or ribbons of a spiral, or spots. Examples of methods for forming spirals and strands of spirals are disclosed in WO2017/216197 A1, WO2015/110226 A1, or WO2010/043497 A2. Examples of methods for forming horizontal layers, spots or other three-dimensional patterns are disclosed in WO2015/110226, WO2013/079411 A1, or EP1348340 A1. Preferably, the chilled dessert comprises a single type of three-dimensional pattern over the height of the chilled dessert. For example, the chilled dessert comprises only layers, only strands or only spots. The three-dimensional patterns are of the same type (e.g. layers, strands, or spots) but they may vary in terms of size and shape over the height of the chilled dessert.

In a specific embodiment, the flavouring sauce is arranged as three-dimensional dots within the matrix over the height (h) of said matrix.

In the specific embodiment where the three-dimensional patterns are horizontal layers, for technical purposes, the chilled dessert comprises at most 6 horizontal layers. Preferably, the chilled dessert comprises at most 5 horizontal layers. Most preferably, the chilled dessert comprises at most 4 horizontal layers.

As the added sugar is in the flavouring sauce, the amount of added sugar in the top half and in the bottom half of the chilled dessert is directly linked to the amount of flavouring sauce in the top half and the bottom half of the chilled dessert.

According to the invention, the amount of flavouring sauce is at least 25% higher in the top half of the chilled dessert than in the bottom half of the chilled dessert. More preferably, the amount of flavouring sauce is at least 30%, 35%, 40%, 45%, 50%, 55%, 60%, 65%, 70%, 75% higher in the top half of the chilled dessert than in the bottom half of the chilled dessert. This enables the optimal repartition of added sugar throughout the chilled dessert to ensure a significant improvement of the sweetness perception upon consumption.

The comparative amount of flavouring sauce between the top half and the bottom half of the chilled dessert may be defined as follows:

$$Q = \frac{Qupper - Qlower}{Qlower} \times 100$$

wherein:

- Q = Comparative amount of flavouring sauce between the top half and the bottom half of the chilled dessert
- $Q_{top}$ = Amount of flavouring sauce in the top half of the chilled dessert,
- $Q_{bottom}$ = Amount of flavouring sauce in the bottom part of the chilled dessert.

In a preferred embodiment, the flavouring sauce is distributed as at least two spirals extending over the height of the chilled dessert. Preferably, the flavouring sauce is distributed as at least three spirals extending over the height of the chilled dessert. More preferably, the flavouring sauce is distributed as at least four, five or six spirals extending from the bottom wall of the container to the surface of the chilled dessert. Most preferably, the flavouring sauce is distributed as from two to ten, two to eight or three to six spirals extending over the height of the chilled dessert. The distribution in a plurality of spirals ensures that the flavouring sauce is well distributed among the whole dessert composition. Hence, this distribution enables that at each spoonful of chilled dessert both of the dessert composition and the flavouring sauce are consumed at the same time. The three-dimensional patterns, in such an embodiment, are the strands of said spirals.

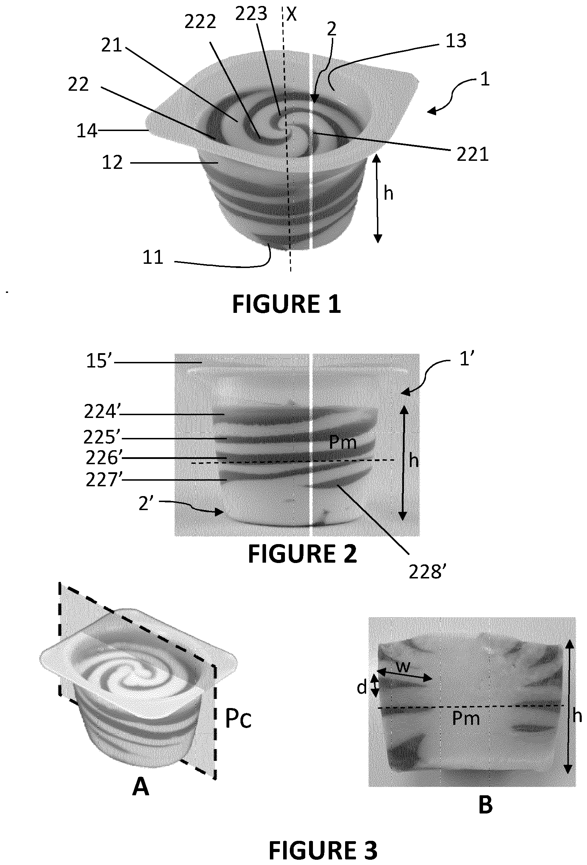

In a particular embodiment, the spirals extend over the height of the chilled dessert by forming a plurality of strands. Preferably, the spirals extend over the height of the chilled dessert by forming at least 5 strands, at least 10 strands, at least 15 strands of spirals or at least 20 strands. In a preferred embodiment, the strands of the spirals have a depth (d) of at least 3mm and a width (w) of at least 11mm (cf. Figure 3). Preferably, the strands of the spirals have a depth ranging from 3mm to 10mm and a width ranging from 11mm to 20mm. More preferably, the strands of the spirals have a depth ranging from 3mm to 8mm and a width ranging from 11mm to 16mm. Where the width and the depth vary along the whole strand, the width and the depth are measured where the width and the depth are the highest.

In a more preferred embodiment, the spirals meet at the surface of the chilled dessert. The consumer by plunging its spoon in the chilled dessert will inevitably reach at least one the spiral as they are meeting on the surface of the chilled dessert. Hence, by plunging the spoon, a part of the flavouring sauce contained in the spirals meeting at the surface of the chilled dessert will penetrate the underlying parts of the chilled dessert, including the bottom half of the chilled dessert. This phenomenon participates in having a part of flavouring sauce and a part of dessert composition at each spoonful of chilled dessert. This makes it even possible in the bottom half of the chilled dessert where the amount of flavouring sauce may be lower than in the top half.

In another preferred embodiment, the chilled dessert is entirely free of any sweeteners. The term "sweeteners" refers to low or non-caloric sugar substitutes which can be natural or artificial. Examples of sweeteners include aspartame, acesulfame K, sucralose, stevia and the like. The chilled dessert of the present invention has an increased sweet taste perception even in the absence of sweeteners.

**Container**

The container has a bottom wall and a side wall which define a hollow body. The bottom wall may be flat or curved. The bottom wall may be generally planar. By "generally planar", it is understood that the bottom wall may comprise non-planar curves but the bottom wall remains mainly flat to ensure that the container is maintained vertically when the bottom is in contact with a horizontal base support. The side wall extends along a longitudinal axis from said bottom wall as far as a top. The longitudinal axis is the median axis passing respectively through the centre of the bottom wall, the hollow chamber and the top, and which is perpendicular to said bottom wall. The bottom wall and the side wall form a hollow body. The hollow body is intended to be filled with the chilled dessert. The container also comprises a top. The top comprises an opening which is opposite to the bottom wall and which is optionally closed with a lid and/or a cap. The chilled dessert may be prepared by dosing its components through the opening on the top of the container.

The container is made of any food-grade packaging materials suitable for chilled dessert. Examples of such materials include glass, polystyrene (PS), polyethylene terephthalate (PET), polylactic acid (PLA) or paper-based materials and combinations thereof. The thermoplastic materials, such as PS, PET and PLA, may be foamed to reduce their density and to modify their mechanical properties. Foaming may be performed according to known methods, for instance by introduction of a gas compound into the material and/or by addition of chemical foaming agents that generate gas upon heating. Examples of such chemical foaming agents are disclosed in WO2014/068348 A1. The thermoplastic materials may also be foamed by the addition of thermally expandable microspheres into the thermoplastic materials. The container may be opaque, translucent or transparent.

In a preferred embodiment, the container is transparent. Indeed, when the container is transparent, the packaged food product has an enhanced attractiveness for the consumer. Especially, the consumers can perceive, through the side wall and the bottom wall, the three-dimensional patterns formed by the flavouring sauce within the dessert composition.

Figure 1 illustrates an example of a packaged food product not according to the invention,

The packaged food product comprises a container 1 and a chilled dessert 2. The container 1 comprises a bottom wall 11 and side wall 12 forming a hollow chamber, or hollow body, which contains the chilled dessert 2. The side wall 12 extends along a longitudinal axis X from the bottom wall 11 as far as a top 14. The top 14 of the container 1 comprises an opening 13 which is opposite to the bottom wall 11. The opening 13 may be closed with a lid and/or a cap (not shown in figure 1). The chilled dessert 2 comprises a dessert composition 21, which is a fermented dairy product such a fresh cheese. The dessert composition 21 is entirely free from added sugar. The chilled dessert 2 comprises a flavouring sauce 22, which is a fruit preparation such as a strawberry preparation. The flavouring sauce 22 comprises at least 25wt% of added sugar. The flavouring sauce 22 is distributed within the dessert composition 21 over the height (h) of the chilled dessert 2. Especially, the flavouring sauce is distributed within the chilled dessert as three spirals 221, 222 and 223 extending over the height of the chilled dessert 2. The three spirals 221, 222 and 223 meet at the surface of the chilled dessert 2. The three spirals 221, 222 and 223 form a plurality of strands over the height of the chilled dessert. For example, seven strands can be perceived in Figure 1.

Figure 2 illustrates a packaged food product similar to the one of Figure 1 seen from the side. Especially, it comprises a similar container 1' and a similar chilled dessert 2' as in figure 1. The packaged chilled dessert of figure 2 differs from the packaged chilled dessert of figure 1 for the following aspects. The container 1' is closed with a lid 15'. Moreover, we can perceive five strands 224'-228'.

Moreover, in figure 2, we can observe that there are more strands in the top half of chilled dessert than in the bottom half of the chilled dessert. The amount of flavouring sauce 22 is higher in the top half is higher than in the bottom half. The top half and the bottom half of the chilled dessert are defined relative to the transversal plane Pm passing the middle of the height (h) of the chilled dessert.

Figure 3B illustrates a section according to plane Pc (figure 3A) of an example of a packaged chilled dessert as disclosed in figures 1 or 2. We can observe, from the section, the plurality of strands distributed over the height of the chilled dessert. We can also observe the depth (d) and the width (w) of a spiral strand. The proportion of strands is higher in the top half of the chilled dessert than in the bottom half of the chilled dessert. This suggests that the amount of flavouring sauce 22 in the top half is higher than in the bottom half. The top half and the bottom half of the chilled dessert are defined relative to the transversal plane Pm passing the middle of the height of the chilled dessert.

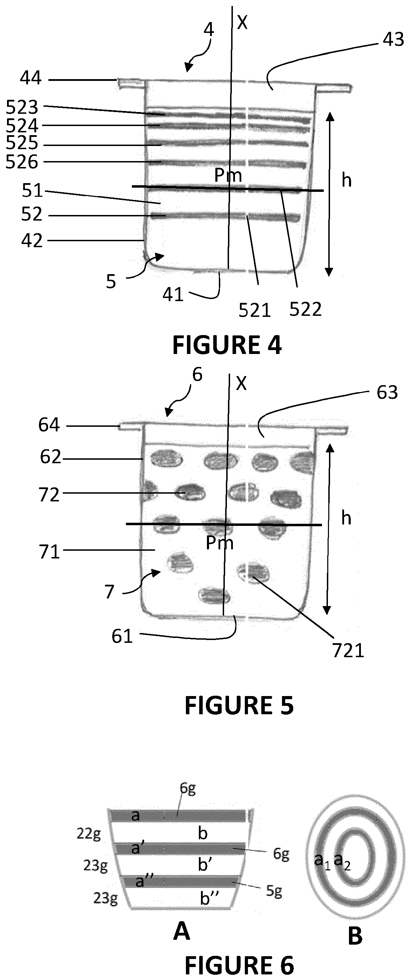

Figure 4 illustrates another example of packaged chilled dessert according to the invention with horizontal layers. The packaged chilled dessert comprises a container 4 and a chilled dessert 5. The container 4 comprises a bottom wall 41 and side wall 42 forming a hollow chamber which is filled with the chilled dessert 5. The side wall 42 extends along a longitudinal axis X from the bottom wall 41 as far as a top 44. The top 44 of the container 4 comprises an opening 43 which is opposite to the bottom wall 41. The opening 43 may be closed with a lid and/or a cap. The chilled dessert 5 comprises a dessert composition 51, which is a fermented dairy product. The dessert composition 51 is entirely free from added sugar. The chilled dessert 5 comprises a flavouring sauce 52, which is a chocolate sauce. The flavouring sauce 52 comprises at least 25wt% of added sugar. The flavouring sauce 52 is distributed within the dessert composition 51 over the height (h) of the chilled dessert 5. Especially, the flavouring sauce 52 is distributed within the dessert composition 51 as a plurality of discontinuous horizontal layers 521-526. There are more horizontal layers in the top half of the chilled dessert than in the bottom half of the chilled dessert. Especially, the proportion of horizontal layer in the top half of the chilled dessert is 66% higher than the proportion of horizontal layer in the bottom half of the chilled dessert. This suggests that the amount of flavouring sauce 22 is higher in the top half is higher than in the bottom half. The top half and the bottom half of the chilled dessert are defined relative to the transversal plane Pm passing the middle of the height (h) of the chilled dessert.

Figure 5 illustrates another example of packaged chilled dessert according to the invention with spots. The packaged chilled dessert comprises a container 6 and a chilled dessert 7. The container 6 comprises a bottom wall 61 and side wall 62 forming a hollow chamber which is filled with the chilled dessert 7. The side wall 62 extends along a longitudinal axis X from the bottom wall 61 as far as a top 64. The top 64 of the container 6 comprises an opening 63 which is opposite to the bottom wall 61. The opening may be closed with a lid and/or a cap (not shown in figure 5). The chilled dessert 7 comprises a dessert composition 71, which is a fermented dairy product. The dessert composition 7 is entirely free from added sugar. The chilled dessert 7 comprises a flavouring sauce 7, which is a chestnut sauce. The flavouring sauce 72 comprises at least 25wt% of added sugar. The flavouring sauce 72 is distributed within the dessert composition 71 over the height (h) of the chilled dessert 7. Especially, the flavouring sauce 72 is distributed within the dessert composition 51 as a plurality of spots 721. The proportion of spots in the top half of the chilled dessert is higher in the top half of the chilled dessert than in the bottom half of the chilled dessert. This suggests that the amount of flavouring sauce 72 in the top half is higher than in the bottom half. The top half and the bottom half of the chilled dessert are defined relative to the transversal plane Pm passing the middle of the height (h) of the chilled dessert.

## EXAMPLES

### Example 1: Chilled desserts manufactured at kitchen scale

The objective of this trial was to assess the impact of a heterogeneous distribution of added sugar versus a homogeneous repartition of added sugar in a chilled dessert, in connection with the sweet taste perception. The chilled desserts in the present trial comprise a fresh cheese as the dessert composition matrix and a strawberry preparation as the flavouring sauce.

1.1. Preparation of the samples

Four samples were prepared:

- Sample 1 comprising 7.2wt% of added sugar. The added sugar is distributed homogenously in the chilled dessert. This sample is referred to as "high-sugar homogeneous sample".
- Sample 2 also comprising 7.2wt% of added sugar. The added sugar is only added in the strawberry preparation. This sample is referred to as "high-sugar heterogeneous sample".
- Sample 3 comprising 5.8wt% of added sugar. The added sugar is only present in the strawberry preparation. This sample is referred to as "low-sugar heterogeneous sample".
- Sample 4 corresponding to sample 2 which was mixed homogeneously with a spoon before consumption. This sample is referred to as "mixed sample".

The high-sugar homogeneous sample (sample 1) was prepared as follows. A sweetened fresh cheese was prepared by mixing 73.3% of a dairy curd comprising 13.5% total solids, 10.2% of a homogenized cream, 9.3% leaven and 7.2% sucrose. A strawberry preparation comprising 7.2% sucrose (added sugar) was provided.

The sweetened fresh cheese and the strawberry preparation were dosed with a piping bag into containers according to Figures 6A and 6B. Three horizontal layers of 22g of fresh cheese b, b' and b" are interspersed by three sets of discontinuous layers of strawberry preparation a, a' and a". Two sets of discontinuous layers of strawberry a, a' comprise 6g of strawberry preparation while the last set a" comprises only 5g of strawberry preparation. Each discontinuous layer of strawberry preparation consists of two parallel cylindrical ribbons $a_1$ and $a_2$ of strawberry preparation: an outer cylindrical ribbon $a_1$ adjacent to the side wall of the container and an inner cylindrical ribbon $a_2$ which is not adjacent to the side wall of the container. After dosing, the final chilled dessert comprises 80wt% of fresh cheese and 20% strawberry preparation. The amount of strawberry preparation is higher in the top half than in the bottom half of the chilled dessert.

The high-sugar heterogeneous sample (sample 2) was prepared as follows. A fresh cheese was prepared by mixing 79wt% of a dairy curd comprising 13.5% total solids, 11% of a homogenized cream and 10% leaven. This fresh cheese does not contain added sugar. A strawberry preparation comprising 36.0wt% sucrose (added sugar) was provided.

The fresh cheese and the strawberry preparation were dosed with a piping bag into containers according to Figure 6. After dosing, the final chilled dessert comprises 80wt% of fresh cheese and 20% strawberry preparation. The amount of strawberry preparation is higher in the top half than in the bottom half of the chilled dessert.

The low-sugar heterogeneous sample (sample 3) was prepared as follows. A fresh cheese was prepared by mixing 79wt% of a dairy curd comprising 13.5% total solids, 11% of a homogenized cream and 10% leaven. This fresh cheese does not contain added sugar. A strawberry preparation comprising 28.8% sucrose was provided.

The fresh cheese and the strawberry preparation were dosed with a piping bag into containers according to Figure 6. After dosing, the final chilled dessert comprises 80wt% of fresh cheese and 20% strawberry preparation. The amount of strawberry preparation is higher in the top half than in the bottom half of the chilled dessert.

After the different samples were prepared and dosed into containers, the containers were sealed and stored at 8°C until consumption.

The mixed sample (sample 4) was prepared and dosed in the same way as the high-sugar heterogeneous sample (sample 2). The only difference between the two samples is that the mixed sample (sample 4) is mixed in the container just before consumption while the high-sugar heterogeneous sample (sample 2) is not.

1.2. Sensory assessment

The samples were assessed monadically, after 3 hours of storage, by a panel of 10 panellists trained to evaluate the sweet taste intensity. The sweet taste intensity of the different samples was assessed by the panellists by giving a score ranging from 0 (lowest intensity) to 10 (highest intensity). The samples were assessed following a randomized presentation.

1.3. Results

The results are summarized in table 1:

Table 1

| Sample | Mean sweet taste intensity score |
|---|---|
| 1. High-sugar homogeneous sample | 5.60 |
| 2. High-sugar heterogeneous sample | 6.63 |
| 3. Low-sugar heterogeneous sample | 5.74 |
| 4. Mixed sample | 5.85 |

The high-sugar heterogeneous sample was perceived significantly as the sweetest. Especially, the high-sugar heterogeneous sample was perceived significantly sweeter than the high-sugar homogenous sample or than the mixed sample. This underlines that a heterogeneous repartition of sugar between the fresh cheese and the strawberry preparation enables to increase the sweet taste intensity of the chilled dessert. The increase in sweet taste is perceived, even if the amount of strawberry preparation is higher in the top half than in the bottom half of the chilled dessert.

Moreover, the low-sugar heterogeneous sample was perceived slightly sweeter than the high-sugar homogeneous sample. This highlights that a heterogeneous repartition of added sugar in a chilled dessert enables to achieve a targeted sweetness intensity with a lower added sugar content compared to a homogeneous repartition of added sugar in a chilled dessert.

**Example 2: Pilot plant scale.**

The objective of this trial was to confirm at pilot plant scale the results obtained in example 1 at kitchen scale. In the present trial, the chilled desserts comprise a fresh cheese as the dessert composition matrix and a strawberry preparation as the flavouring sauce.

2.1. Preparation of samples

Two samples were prepared:

- A first sample comprising 7.2wt% of added sugar distributed homogeneously within the fresh cheese and the strawberry preparation. This sample is referred to as "homogeneous sample".
- A second sample comprising 7.2wt% of added sugar distributed heterogeneously in the dessert. Namely, the added sugar is present only in the strawberry preparation. This sample is referred to as "heterogeneous sample".

The homogeneous sample was prepared with the same recipes for the sweetened fresh cheese and the strawberry preparation as for the high-sugar homogeneous sample of example 1. A sweetened fresh cheese was prepared by mixing 73.3% of a dairy curd comprising 13.5% total solids, 10.2% of a homogenized cream, 9.3% yogurt and 7.2% sucrose. A strawberry preparation comprising 7.2% was also provided.

The sweetened fresh cheese and the strawberry preparation were dosed with a rotative nozzle into containers according to the pattern disclosed in Figure 1. Especially, the strawberry preparation was co-dosed with the fresh cheese such that the strawberry preparation is distributed within the fresh cheese as three spirals extending over the height of the chilled dessert and meeting at the surface of the chilled dessert. The final chilled dessert comprises 80wt% of fresh cheese and 20wt% of strawberry preparation. The amount of strawberry preparation is higher in the top half of the chilled dessert than in the bottom half of the chilled dessert.

The heterogeneous sample was prepared with the same recipes for the fresh cheese and the strawberry preparation as for the high-sugar heterogeneous sample of example 1. A fresh cheese was prepared by mixing 79wt% of a dairy curd comprising 13.5% total solids, 11% of a homogenized cream and 10% yogurt. The fresh cheese does not contain added sugar. A strawberry preparation comprising 36.0wt% sucrose was also provided. The added-sugar free fresh cheese and the strawberry preparation were dosed into containers in the same way as described for the homogenous sample above.

After the different samples were prepared and dosed into containers, the containers were sealed and stored at 8°C until consumption.

2.2. Sensory assessment

The different samples were assessed monadically, after 7 days of storage, by a panel of 10 panellists trained to evaluate the sweet taste intensity. The sweet taste intensity was assessed by the panellists by giving a score ranging from 0 to 10. The samples were assessed following a randomized presentation.

2.3. Results

The results are summarized in table 2:

Table 2

| Sample | Mean sweet taste intensity score (after 7 days of storage) |
|---|---|
| Homogeneous sample | 5.63 |
| Heterogeneous sample | 6.68 |

The heterogeneous sample was perceived as significantly sweeter than the homogeneous sample after 7 days of storage. This confirms the results obtained at kitchen scale. Also, it shows that the probable migration of sugar during storage, from the flavouring sauce to the chilled dessert (the fresh cheese) does not affect the improved sweetness perception in the heterogenous sample. A heterogeneous repartition of sugar between the fresh cheese and the strawberry preparation enables to increase the sweet taste intensity of the chilled dessert.

As shown here, it is thus possible to reduce the sugar content of a chilled dessert, on an industrial scale, without affecting the sweetness perception of the product.

**EP 4 138 566 B1**

**Claims**

1.  A packaged food product comprising:

    - a container (1) which comprises a bottom wall (11) and a side wall (12) extending along a longitudinal axis (X) from said bottom wall (11) to a top, the bottom wall and the side wall define a hollow body, the top having an opening (13) opposite the bottom wall (11), optionally comprising a seal over the top of the container (1),
    - in the hollow body of the container, a chilled dessert which comprises a flavouring sauce (22) embedded in a matrix consisting of a dessert composition (21),
    wherein the dessert composition (21) is entirely free of added sugar,
    wherein the flavouring sauce (22) comprises at least 25wt% of added sugar, and
    wherein the amount of flavouring sauce (22) decreases from the top to the bottom of the chilled dessert and wherein the amount of flavouring sauce (224', 521, 721) is at least 25% higher in the top half of the chilled dessert than in the bottom half of the chilled dessert,
    wherein the chilled dessert (2) comprises from 60wt% to 90wt% of dessert composition (21) and wherein the chilled dessert comprises from 10wt% to 40wt% of flavouring sauce.

2.  The packaged food product according to claim 1, wherein the flavouring sauce is arranged as three-dimensional patterns (224', 521, 721) within the matrix, over the height (h) of said matrix, for instance as dots, spirals, or layers.

3.  The packaged food product according to claim 2, wherein the flavouring sauce (22) is distributed as at least two spirals, preferably three spirals (221, 222, 223), extending over the height (h) of the chilled dessert (2).

4.  The packaged food product according to claim 2 or 3, wherein the spirals (221, 222, 223) meet at the surface of the chilled dessert (2).

5.  The packaged food product according to any one of claims 1 to 4, wherein the chilled dessert (2) comprises from 75wt% to 90wt% of dessert composition (21) and from 10wt% to 25wt% of flavouring sauce (22).

6.  The packaged food product according to any one of claims 1 to 5, wherein the dessert composition (21) is selected from the list consisting of fermented dairy compositions, dairy dessert cream compositions, dairy pudding compositions, dairy mousse compositions and plant-based analogues thereof.

7.  The packaged food product according to any one of claims 1 to 6, wherein the flavouring sauce (22) is selected from the list consisting of fruit preparations, chocolate sauces, coffee sauces, nut sauces and mixtures thereof.

**Patentansprüche**

1.  Verpacktes Lebensmittelprodukt, umfassend:

    - einen Behälter (1), umfassend eine Bodenwand (11) und eine Seitenwand (12), die sich entlang einer Längsachse (X) von der Bodenwand (11) zu einer Oberseite erstreckt, wobei die Bodenwand und die Seitenwand einen hohlen Körper definieren, wobei die Oberseite eine Öffnung (13) gegenüber der Bodenwand (11) aufweist, optional umfassend eine Dichtung über der Oberseite des Behälters (1),
    - in dem hohlen Körper des Behälters, ein gekühltes Dessert, das eine Aromasauce (22) umfasst, die in eine Matrix eingebettet ist, die aus einer Dessert-Zusammensetzung (21) zusammengesetzt ist,
    wobei die Dessert-Zusammensetzung (21) vollständig frei von zugesetztem Zucker ist,
    wobei die Aromasauce (22) mindestens 25 Gew.-% zugesetzten Zucker umfasst, und
    wobei die Menge an Aromasauce (22) von der Oberseite zu dem Boden des gekühlten Desserts abnimmt und wobei die Menge an Aromasauce (224', 521, 721) in der oberen Hälfte des gekühlten Desserts mindestens 25 % höher ist als in der unteren Hälfte des gekühlten Desserts, wobei das gekühlte Dessert (2) von 60 Gew.-% bis 90 Gew.-% Dessert-Zusammensetzung (21) umfasst und wobei das gekühlte Dessert von 10 Gew.-% bis 40 Gew.-% Aromasauce umfasst.

2.  Verpacktes Lebensmittelprodukt nach Anspruch 1, wobei die Aromasauce als dreidimensionale Muster (224', 521, 721) innerhalb der Matrix über die Höhe (h) der Matrix angeordnet ist, beispielsweise als Punkte, Spiralen oder Schichten.

**3.** Verpacktes Lebensmittelprodukt nach Anspruch 2, wobei die Aromasauce (22) als mindestens zwei Spiralen, vorzugsweise drei Spiralen (221, 222, 223), verteilt ist, die sich über die Höhe (h) des gekühlten Desserts (2) erstrecken.

**4.** Verpacktes Lebensmittelprodukt nach Anspruch 2 oder 3, wobei die Spiralen (221, 222, 223) an der Oberfläche des gekühlten Desserts (2) zusammentreffen.

**5.** Verpacktes Lebensmittelprodukt nach einem der Ansprüche 1 bis 4, wobei das gekühlte Dessert (2) von 75 Gew.-% bis 90 Gew.-% Dessert-Zusammensetzung (21) und von 10 Gew.-% bis 25 Gew.-% Aromasauce (22) umfasst.

**6.** Verpacktes Lebensmittelprodukt nach einem der Ansprüche 1 bis 5, wobei die Dessert-Zusammensetzung (21) aus der Liste ausgewählt ist, bestehend aus fermentierten Milchzusammensetzungen, Milchdessertcremezusammensetzungen, Milchpuddingzusammensetzungen, Milchmoussezusammensetzungen und pflanzlichen Analoga davon.

**7.** Verpacktes Lebensmittelprodukt nach einem der Ansprüche 1 bis 6, wobei die Aromasauce (22) aus der Liste ausgewählt ist, bestehend aus Fruchtzubereitungen, Schokoladensaucen, Kaffeesaucen, Nusssaucen und Mischungen davon.

**Revendications**

**1.** Produit alimentaire conditionné comprenant :

- un récipient (1) qui comprend une paroi inférieure (11) et une paroi latérale (12) s'étendant le long d'un axe longitudinal (X) de ladite paroi inférieure (11) jusqu'à une partie supérieure, la paroi inférieure et la paroi latérale définissent un corps creux, la partie supérieure ayant une ouverture (13) opposée à la paroi inférieure (11), comprenant éventuellement un joint sur la partie supérieure du récipient (1),
- dans le corps creux du récipient, un dessert réfrigéré qui comprend une sauce aromatisante (22) incorporée dans une matrice constituée d'une composition de dessert (21),
dans lequel la composition de dessert (21) est entièrement exempte de sucre ajouté,
dans lequel la sauce aromatisante (22) comprend au moins 25 % en poids de sucre ajouté, et
dans lequel la quantité de sauce aromatisante (22) diminue du haut vers le bas du dessert réfrigéré et dans lequel la quantité de sauce aromatisante (224', 521, 721) est au moins 25 % plus élevée dans la moitié supérieure du dessert réfrigéré que dans la moitié inférieure du dessert réfrigéré, dans lequel le dessert réfrigéré (2) comprend de 60 % en poids à 90 % en poids de composition de dessert (21) et dans lequel le dessert réfrigéré comprend de 10 % en poids à 40 % en poids de sauce aromatisante.

**2.** Produit alimentaire conditionné selon la revendication 1, dans lequel la sauce aromatisante est disposée en tant que motifs tridimensionnels (224', 521, 721) au sein de la matrice, sur la hauteur (h) de ladite matrice, par exemple sous forme de points, de spirales ou de couches.

**3.** Produit alimentaire conditionné selon la revendication 2, dans lequel la sauce aromatisante (22) est répartie en au moins deux spirales, de préférence trois spirales (221, 222, 223), s'étendant sur la hauteur (h) du dessert réfrigéré (2).

**4.** Produit alimentaire conditionné selon la revendication 2 ou 3, dans lequel les spirales (221, 222, 223) se rejoignent à la surface du dessert réfrigéré (2).

**5.** Produit alimentaire conditionné selon l'une quelconque des revendications 1 à 4, dans lequel le dessert réfrigéré (2) comprend de 75 % en poids à 90 % en poids de composition de dessert (21) et de 10 % en poids à 25 % en poids de sauce aromatisante (22).

**6.** Produit alimentaire conditionné selon l'une quelconque des revendications 1 à 5, dans lequel la composition de dessert (21) est choisie dans la liste constituée de compositions laitières fermentées, de compositions de crème dessert laitière, de compositions de pudding laitier, de compositions de mousse laitière et d'analogues d'origine végétale de celles-ci.

**7.** Produit alimentaire conditionné selon l'une quelconque des revendications 1 à 6, dans lequel la sauce aromatisante (22) est choisie dans la liste constituée de préparations de fruits, de sauces au chocolat, de sauces au café, de sauces aux noix et de mélanges de celles-ci.

**FIGURE 1**

**FIGURE 2**

**FIGURE 3**

**FIGURE 4**

**FIGURE 5**

**A**          **B**

**FIGURE 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017216196 A1
- US 20030039728 A1
- WO 2017216197 A1
- WO 2015110226 A1
- WO 2010043497 A2
- WO 2015110226 A
- WO 2013079411 A1
- EP 1348340 A1
- WO 2014068348 A1